Europäisches Patentamt

European Patent Office

Office européen des brevets

(11) Veröffentlichungsnummer: **0 446 569 A1**

# EUROPÄISCHE PATENTANMELDUNG

(21) Anmeldenummer: 90890346.1

(22) Anmeldetag: 20.12.90

(51) Int. Cl.5: **C09K 3/32**, A01K 1/015

(30) Priorität: 08.02.90 AT 278/90

(43) Veröffentlichungstag der Anmeldung:
18.09.91 Patentblatt 91/38

(84) Benannte Vertragsstaaten:
AT BE CH DE DK ES FR GB GR IT LI LU NL SE

(71) Anmelder: NAINTSCH MINERALWERKE
GESELLSCHAFT M.B.H.
Mariahilferplatz 5
A-8020 Graz(AT)

(72) Erfinder: Wamser, Norbert, Dr.
Mariahilferplatz 5
A-8020 Graz(AT)

(74) Vertreter: Pfeifer, Otto, Dipl.-Ing. et al
Patentanwälte, Dipl.-Ing. Dr. techn. Schütz,
Alfred, Dipl.-Ing. Holzer, Walter Dipl.-Ing.
Pfeifer, Otto Fleischmanngasse 9
A-1040 Wien(AT)

(54) Tierstreu und Verfahren zu deren Herstellung.

(57) Beschrieben wird eine Tierstreu aus einem festen Absorptionsmaterial auf der Basis von Talk oder ähnlich aufgebautem Schichtsilikat, wobei das Absorptionsmaterial zur Einstellung der Druckfestigkeit einen Gehalt an 0,5 bis 2 Gew.-% eines Bindemittels und zur Einstellung des Porenvolumens einen Gehalt an 0,2 bis 1,0 Gew.-% eines Netzmittels aufweist. Die Tierstreu läßt sich in einfacher Weise durch Anteigen von Talkpulver mit Wasser, Bindemittel und Netzmittel und Trocknen, Brechen und Sieben der erhaltenen Masse herstellen. Die Tierstreu zeichnet sich durch hohes Wasser- bzw. Urinaufnahmevermögen, hohes Geruchsbindungsvermögen, geringe Staubbildung und leichte Entsorgung der nassen Pellets aus.

EP 0 446 569 A1

## TIERSTREU UND VERFAHREN ZU DEREN HERSTELLUNG

Die Erfindung betrifft eine Tierstreu sowie ein Verfahren zur Herstellung derselben.

Zur Herstellung von Tierstreu werden meistens Naturprodukte mineralischen oder organischen Ursprungs verwendet, die auf Grund ihrer Porenstruktur die Eigenschaft besitzen, Flüssigkeiten in diese Poren aufzunehmen. Beispiele für derartige bekannte Materialien sind Bimsstein, Tonmineralien, Kieselgur, Holzmehle, Torf und dergleichen.

Absorbierende Materialien, die unter anderem auch als eine Tierstreu geeignet sein sollen, werden in den US-A-4 657 881 und 4 686 937 und in GB-A-1 593 058 beschrieben.

Es ist auch schon vorgeschlagen worden, künstlich hergestelltes Calciumsilikathydratgranulat mit Tobermoritstruktur für eine Tierstreu zu verwenden. So wird in der EP-B-0 204 162 eine Tierstreu aus oder mit einem Gehalt an festem Absorptionsmittel vorgeschlagen, dessen pH-Wert, gemessen in wäßriger Aufschlämmung, zur Verbesserung der Geruchsbindung durch Behandlung mit einem wasserlöslichen Metallsalz der Gruppe Ib des Periodensystems abgesenkt ist. Als Absorptionsmaterial soll hiebei ein insbesondere gemäß der DE-B-2 902 079 künstlich hergestelltes poröses das mit wasserlöslichem Zinksalz behandelt ist, wobei das getrocknete Calciumsilikathydratgranulat einen Zinkgehalt von 0,5 bis 1,5 Gew.-% bei einem wasserlöslichen Zinkanteil von 0,01 bis 100 ppm aufweisen soll und der pH-Wert des Calciumsilikathydratgranulates in wäßriger Aufschlämmung zwischen 7,5 und 8,5 liegen soll.

Die Herstellung dieser Tierstreu aus künstlichem Calciumsilikathydrathydratgranulat erfordert ein aufwendiges mehrstufiges Drucksynthese-, Sprüh- und Trocknungsverfahren, zu dessen Ausführung Druckautoklaven, Airless-Sprühvorrichtungen und Trockenanlagen benötigt werden.

Der Erfindung liegt nunmehr die Aufgabe zu Grunde, eine Tierstreu aus natürlich zur Verfügung stehenden Ausgangsprodukten mineralischen Ursprungs, insbesondere Talk oder ähnlich aufgebauten Schichtsilikaten, zu schaffen, die sich durch ein hohes Wasseraufnahmevermögen, ein hohes Geruchsbindungsvermögen, eine geringe Neigung zum Stauben sowie eine leichte Entsorgung der nassen Pellets auszeichnet.

Erfindungsgemäß wird diese Aufgabe durch eine Tierstreu aus einem festen Absorptionsmaterial auf der Basis von Talk oder ähnlich aufgebautem Schichtsilikat gelöst, die sich dadurch auszeichnet, daß das Absorptionsmaterial Talkpulver mit einer Ausgangskorngröße von 60 bis 100 $\mu$m ist und zur Einstellung der Druckfestigkeit einen Gehalt von 0,5 bis 2 Gew.-% eines Bindemittels, ausgewählt aus Hydroxyethylcellulosen, Ethylhydroxyethylcellulosen, Methylcellulosen, Hydroxymethylcellulosen und Hydroxypropylmethylcellulosen, und zur Einstellung des Porenvolumens einen Gehalt an 0,2 bis 1,0 Gew.-% eines Netzmittels, ausgewählt aus Fettalkohol(ether)sulfaten, Alkylarylsulfonaten, ethoxylierten Acetylenalkoholen und -diolen oder substituierten Polyacrylaten, enthält.

Als Bindemittel zur Einstellung der Druckfestigkeit der Tierstreupellets gelangen Cellulosen aus der Gruppe der Hydroxyethylcellulosen, Ethylhydroxyethylcellulosen, Methylcellulosen, Hydroxypropylmethylcellulosen und ähnliche zum Einsatz, beispielsweise Cellobond®, Tylose® oder Culminal$^R$.

Als Netzmittel gelangen in der erfindungsgemäßen Tierstreu beispielsweise Dispex®, Nonidet®, Surfynol® oder Tensaryl® zum Einsatz.

Gegebenenfalls kann die erfindungsgemäße Tierstreu Bakterizide enthalten, insbesondere solche aus der Gruppe der Hydroxybenzoesäureester, bromierte Nitropropandiole und Sorbinsäuresalze, beispielsweise Sterac® oder Myacide®.

Weiterhin kann die erfindungsgemäße Tierstreu einen Säurezusatz enthalten, um den pH-Wert in einem leicht sauren Bereich zu halten, wodurch die Freisetzung von unangenehm riechendem Ammoniak verhindert wird. Als Säurezusatz eignen sich beispielsweise Zitronensäure, Weinsäure, Oxalsäure und dergleichen.

Die erfindungsgemäße Tierstreu kann in einfacher Weise dadurch hergestellt werden, daß das Talkpulver mit einer Ausgangskorngröße von 60 bis 100 $\mu$m mit Wasser unter Zusatz des Bindemittels und des Netzmittels angeteigt wird und diese Masse, gegebenenfalls nach einem Pelletieren unter Ausbildung von Aufbauagglomeraten oder einem Pressen (Frewittverfahren, Matritzenpressen), getrocknet, zur gewünschten Korngröße gebrochen und gesiebt wird.

Eine weitere vorteilhafte Herstellungsvariante erfolgt unter Einsatz von Hydroxymethylcellulose als Bindemittel und eines Netzmittelgemisches zur Porenvolumeneinstellung, wobei während des Mischens von Talkpulver mit dem Bindemittel und dem Netzmittelgemisch sowie mit Wasser direkt poröse Agglomerate erhalten werden.

Die erfindungsgemäße Tierstreu zeichnet sich durch ein hohes Aufnahmevermögen für Wasser bzw. Urin und insbesondere durch ein hohes Geruchsbindungsvermögen aus. Die geruchsintensiven schwefelhaltigen Stoffe, wie sie beispielsweise im Katzenurin enthalten sind, können mit der erfindungsgemäßen Tierstreu zuverlässig und dauerhaft gebunden werden. Darüberhinaus zeigt die erfindungsgemäße Tierstreu nur geringe Staubentwicklung und ermöglicht eine leichte Entsorgung der nassen Pellets, die beim Einstreuen in Wasser zu kleinsten Teilchen zerfallen.

Die Erfindung wird in den nachfolgenden Beispielen näher erläutert.

Beispiel 1:

59,4 Gew.-% Talkpulver (Korngröße 60 bis 100 $\mu$m) werden mit 39,6 Gew.-% Wasser und 0,4 Gew.-% Tylose® angeteigt, worauf 0,6 Gew.-% Netzmittel (Prilon®) zugesetzt werden. Es tritt eine Volumensvergrößerung um 60 bis 70% ein. Die angeteigte Masse wird auf eine Unterlage aufgestrichen und im Bandtrockner bei 105° C bis zur Gewichtskonstanz getrocknet. Nach dem Brechen der getrockneten Masse im Stichelwalzenbrecher auf eine Korngröße von 0,5 bis 1 cm wird eine Tierstreu erhalten, die 100 % ihres Eigengewichtes an Wasser aufnehmen kann.

Beispiel 2:

64,0 Gew.-% Talkpulver gemäß Beispiel 1 werden mit 34,8 Gew.-% Wasser, dem 0,6 Gew.-% Bindemittel Tylose® zugesetzt worden sind, angeteigt, mit 0,6 Gew.-% Netzmittel Prilon® versetzt und, wie in Beispiel 1 beschrieben, getrocknet und zerkleinert. Die erhaltene Tierstreu zeigt ein Wasseraufnahmevermögen von 95% ihres Eigengewichtes.

Beispiel 3:

64,3 Gew.-% Talkpulver gemäß Beispiel 1 werden mit 33,5 Gew.-% Wasser und 1,3 Gew.-% Bindemittel Tylose® und 0,9 Gew.-% Netzmittel Prilon® angeteigt und zu Aufbauagglomeraten pelletiert. Nach dem Trocknen, Brechen und Sieben wird eine Tierstreu mit einem Wasseraufnahmevermögen von 124% ihres Eigengewichtes erhalten.

Beispiel 4:

65,7 Gew.-% Talkpulver gemäß Beispiel 1 werden mit 33,2 Gew.-% Wasser und 0,65 Gew.-% Bindemittel Cellobond® angeteigt. Zum angeteigten Talkpulver werden 0,45 Gew.-% Prilon® als Netzmittel zugesetzt, was zu einer Volumensvergrößerung der angeteigten Masse um 60 bis 70% führt. Diese Masse wird im Bandtrockner bei 105° C bis zur Gewichtskonstanz getrocknet, hierauf im Stichelwalzenbrecher gebrochen und auf eine Korngröße von 0,5 bis 1 cm ausgesiebt. Die erhaltenen Körner weisen eine Wasseraufnahme von 135 Gew.-% ihres Eigengewichtes sowie eine Druckfestigkeit von 81 N/cm² auf.

Beispiel 5:

65,3 Gew.-% Talkpulver gemäß Beispiel 1 werden mit 33,0 Gew.-% Wasser und 1,3 Gew.-% Cellobond® als Bindemittel angeteigt und mit 0,4 Gew.-% Prilon® als Netzmittel versetzt. Die angeteigte Masse wird zu Aufbauagglomeraten pelletiert, getrocknet, gebrochen und gesiebt, und führt zu Pellets mit einem Wasseraufnahmevermögen von 103% ihres Eigengewichtes und einer Druckfestigkeit von 119 N/cm².

Beispiel 6:

65,7 Gew.-% Talkpulver gemäß Beispiel 1 werden mit 33,2 Gew.-% Wasser und 0,65 Gew.-% Cellobond® als Bindemittel sowie 0,45 Gew.-% Prilon® als Netzmittel angeteigt, im Bandtrockner bei 105° C bis zur Gewichtskonstanz getrocknet und im Stichelwalzenbrecher gebrochen und auf eine Korngröße von 0,5 bis 1 cm ausgesiebt. Die erhaltenen Körner weisen ein Wasseraufnahmevermögen von 126% ihres Eigengewichtes und eine Druckfestigkeit von 84 N/cm² auf.

Beispiel 7:

67 Gew.-% Talkpulver gemäß Beispiel 1 werden mit 31 Gew.-% Wasser und 1,2 Gew.-% Hydroxymethylcellulose als Bindemittel vermischt und mit 0,8 Gew.-% Netzmittelgemisch versetzt. Im Netzmittelgemisch liegen Dodecylbenzolsulfonat und Natriumlaurylethersulfat im Gewichtsverhältnis 3:2 vor. Beim Mischvorgang bilden sich poröse kugelförmige Agglomerate mit einem Durchmesser von 2 bis 3 mm aus, die nach dem Trocknen der Masse erhalten bleiben und nur in der von einem geringen Anteil an Staub abgesiebt werden müssen.

**Patentansprüche**

1. Tierstreu aus einem festen Absorptionsmittel auf der Basis von Talk oder ähnlich aufgebautem Schichtsilikat, dadurch gekennzeichnet, daß das Absorptionsmaterial Talkpulver mit einer Ausgangskorngröße von 60 bis 100 $\mu$m ist und zur Einstellung der Druckfestigkeit einen Gehalt von 0,5 bis 2 Gew.-% eines Bindemittels, ausgewählt aus Hydroxyethylcellulosen, Ethylhydroxyethylcellulosen, Methylcellulosen, Hydroxymethylcellulosen und Hydroxypropylmethylcellulosen, und zur Einstellung des Porenvolumens einen Gehalt an 0,2 bis 1,0 Gew.-% eines Netzmittels, ausgewählt aus Fettalkohol(ether)sulfaten, Alkylarylsulfonaten, ethoxylierten Acetylenalkoholen und -diolen oder substituierten Polyacrylaten, enthält.

2. Tierstreu nach Anspruch 1, dadurch gekennzeichnet, daß sie zusätzlich Bakterizide, insbesondere aus der Gruppe der Hydroxybenzoesäureester, bromierte Nitropropandiole und Sorbinsäuresalze, enthält.

3. Verfahren zur Herstellung der Tierstreu nach Anspruch 1 oder 2, dadurch gekennzeichnet, daß Talkpulver mit einer Korngröße von 60 bis 100 μm unter Zusatz von Bindemittel und Netzmittel angeteigt und die angeteigte Masse getrocknet, auf die erforderliche Korngröße gebrochen und gesiebt wird.

4. Verfahren nach Anspruch 3, dadurch gekennzeichnet, daß die angeteigte Masse unter Ausbildung von Aufbauagglomeraten pelletiert und anschließend getrocknet, gebrochen und gesiebt wird.

5. Verfahren nach Anspruch 3, dadurch gekennzeichnet, daß die angeteigte Masse verpreßt und die Preßkörper getrocknet, zur erforderlichen Korngröße gebrochen und gesiebt werden.

6. Verfahren zur Herstellung einer Tierstreu nach Anspruch 1 oder 2, dadurch gekennzeichnet, daß Talkpulver mit einer Korngröße von 60 bis 100 μm mit Hydroxymethylcellulose als Bindemittel und einem Netzmittelgemisch aus Dodecylbenzolsulfonat und Natriumlaurylethersulfat sowie Wasser vermischt und direkt zu formbeständigen porösen Kügelchen agglomeriert wird und die erhaltenen Kügelchen getrocknet werden.

7. Verwendung von Talkpulver, das mit einem Bindemittel und einem Netzmittel versetzt worden ist, zur Herstellung einer Tierstreu, insbesondere für Katzen.

# EUROPÄISCHER
# RECHERCHENBERICHT

Nummer der Anmeldung

**EP 90 89 0346**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 403 099   (STRABIT-WERKE)<br>* Beispiele 1-3; Ansprüche 1-7 *<br>– – – | 1,7 | C 09 K 3/32<br>A 01 K 1/015 |
| D,A | DE-A-2 902 079   (MINORA)<br>* Spalte 1, Zeilen 55-68; Spalte 2, Zeilen 1-8; Spalte 3, Zeilen 61-68; Beispiele; Ansprüche *<br>– – – | 1,7 | |
| D,A | EP-A-0 087 001   (LAPORTE IND. LTD)<br>* Seite 4, Zeilen 18-33 von oben; Ansprüche *<br>– – – – – | 1-7 | |

| | RECHERCHIERTE SACHGEBIETE (Int. Cl.5) |
|---|---|
| | C 09 K<br>A 01 K |

**Der vorliegende Recherchenbericht wurde für alle Patentansprüche erstellt**

| Recherchenort | Abschlußdatum der Recherche | Prüfer |
|---|---|---|
| Den Haag | 13 Mai 91 | LEDER M. |